# EUROPÄISCHE PATENTSCHRIFT

(11) **EP 3 123 867 B1**
(45) Veröffentlichungstag und Bekanntmachung des Hinweises auf die Patenterteilung: **20.12.2017**
(21) Anmeldenummer: 15179017.7
(22) Anmeldetag: 30.07.2015
(51) Int. Cl.: A22C 11/02

(54) **VERFAHREN UND VORRICHTUNG ZUR VEREINFACHTEN AUSRICHTUNG EINER FÜLLMASCHINE ZUR WURSTHERSTELLUNG**
METHOD AND DEVICE FOR SIMPLIFIED ALIGNMENT OF A FILLING MACHINE FOR SAUSAGE PRODUCTION
PROCEDE ET DISPOSITIF D'ORIENTATION SIMPLIFIEE D'UNE MACHINE DE REMPLISSAGE POUR LA FABRICATION DE SAUCISSES

(43) Veröffentlichungstag der Anmeldung: 01.02.2017
(73) Patentinhaber: Albert Handtmann Maschinenfabrik GmbH & Co. KG, 88400 Biberach (DE)
(72) Erfinder: Maile, Bernd, 88422 Oggelshausen (DE); Staudenrausch, Martin, 88400 Biberach (DE); Nusser, Marcel, 88400 Biberach (DE)
(74) Vertreter: Grünecker Patent- und Rechtsanwälte PartG mbB

(56) Entgegenhaltungen:
- EP-A1- 0 198 486
- EP-A1- 0 275 487
- EP-A1- 1 172 035
- EP-A2- 0 226 925
- EP-A2- 0 352 825
- US-A1- 2001 023 170

## Beschreibung

Die Erfindung betrifft ein Verfahren zum Ausrichten einer Füllmaschine, insbesondere zur Wurstherstellung.

Eine solche Füllmaschine ist bereits aus der EP 0 352 825 A2 bekannt. Die Füllmaschine umfasst ein Maschinengehäuse, einen Fülltrichter, ein Füllrohr und Maschinenfüße.

Bei der Inbetriebnahme von Füllmaschinen in einer Produktionsumgebung wird zumeist darauf geachtet, dass diese in der Höhe nivelliert ist. Zudem wird versucht, die Füllmaschine möglichst waagrecht auszurichten. In seltenen Fällen kann es vorteilhaft sein, eine bestimmte, bewusste Neigung in eine oder mehrere Richtungen herzustellen (beispielsweise zur Ausrichtung der Füllmaschine an eine ebenfalls geneigt aufgestellte Anbaumaschine).

Es kommt häufig vor, dass Fußböden in handwerklichen und industriellen Produktionsräumen eine bestimmte Neigung in verschiedene Richtungen aufweisen, beispielsweise 2 %, damit bei der Maschinen- oder Gebäudereinigung anfallendes Reinigungsmittel, sowie Schmutzwasser, gezielt durch Abläufe entsorgt werden kann. Herkömmlicherweise wird die Höhe intuitiv eingestellt oder durch beispielsweise ein Maßband unterstützt. Dann werden beispielsweise die Füße der Füllmaschinen über Gewinde in ihrer Höhe verstellt, so dass das Füllrohr der Maschine über dem Fußboden in einer bestimmten Höhe liegt (beispielsweise um passende Anbaumaschinen des nachfolgenden Prozesses anzuschließen oder aus ergonomischen Gründen). Zum Ausrichten der Neigung der Füllmaschine wird entweder kein Messwerkzeug verwendet (sondern Schätzwerte bzw. Augenmaß) oder es wird z.B. eine Wasserwaage eingesetzt.

Die Einstellung von mehreren Maschinenfüßen ist mitunter kraft- und zeitintensiv, da sich beim Verstellen eines einzelnen Maschinenfußes der Effekt auf das gesamte Einstellergebnis nur schwer abschätzten lässt und es vorkommt, dass die Füllmaschine über zwei Maschinenfüße abkippt oder ein Maschinenfuß ohne Bodenkontakt ist. Bei größeren Neigungen des Maschinenuntergrunds bzw. Fußbodens müssen Maschinenfüße im Einzelnen sehr unterschiedlich (in der Anzahl der Einstellumdrehungen) verstellt werden, um das gewünschte Ergebnis zu erhalten.

Daher sind, selbst bei erfahrenem Personal, bei unebenen Fußböden, oft mehrere Iterationsschritte notwendig, um die Füllmaschine in eine exakte Höhen- und Ausrichtungslage einzustel len. Das Ergebnis muss, so zeigt die Erfahrung, während des Einstellvorgangs mehrfach überprüft und korrigiert werden.

Es folgt daraus, dass Füllmaschinen in der Praxis nicht immer optimal ausgerichtet sind. Ein weiterer Nachteil kommt zum Tragen, wenn an die Füllmaschine angekoppelte Anbaumaschi nen, durch eine falsch eingestellte Höhe der Füllmaschine, in Teilen oder ganz mit deren Gewicht entweder am Auslauf der Füllmaschine hängen oder versuchen, diesen nach oben zu drücken - es wirkt eine starke mechanische Belastung auf die betroffenen Bauteile, die gegebenenfalls zu plastischen Verformungen, Rissen oder Brüchen führen kann, wodurch hohe Folgekosten entstehen.
Hiervon ausgehend liegt der vorliegenden Erfindung die Aufgabe zugrunde, ein Verfahren zum Ausrichten einer Füllmaschine, sowie eine entsprechende Füllmaschine bereitzustellen, die es ermöglichen, dass die Füllmaschine auf einfache und zuverlässige Weise in ihrer Höhe und/oder Neigung ausgerichtet werden kann.
Erfindungsgemäß wird diese Aufgabe durch ein Verfahren und eine Vorrichtung gemäß den Ansprüchen 1 und 10 gelöst.
Gemäß der Erfindung wird nun die Höhe und/oder Neigung einer Füllmaschine entsprechend einem Ist-Zustand gemessen. Bevorzugt wird die Höhe und die Neigung bestimmt, denn dann kann die Füllmaschine exakt mit einer vorbestimmten Neigung bei einer vorbestimmten Höhe aufgestellt werden.
Unter Höhe der Füllmaschine versteht man hier beispielsweise den Abstand eines Anlagenbezugspunkts zum Fußboden, auf dem die Füße der Füllmaschine aufgestellt sind. Wo dieser Bezugspunkt liegt, ist für die Messung irrelevant, da aufgrund bekannter Maschinenabmessungen stets die Lage eines bestimmten Punktes an der Maschine, beispielsweise die Füllrohrachsenhöhe bestimmt werden kann.
Unter Messen der Neigung, versteht man das Messen bestimmter Werte, die herangezogen werden können, um z.B. die Neigung einer Anlagenbezugsebene (z.B. zu einer Bezugsebene insbesondere zur Horizontalebene) festzulegen. Eine Anlagenbezugsebene ist beispielsweise eine Ebene, die senkrecht auf der Längsachse L der Maschine steht, z.B. eine Ebene, die eine ebene Oberfläche des Maschinengehäuses einschließt, oder eine dazu parallele Ebene.
Die Messwerte werden dann an eine Berechnungseinheit der Füllmaschine, die Teil einer Maschinensteuerung sein kann, übermittelt. Die Berechnungseinheit vergleicht dann den Ist-Zustand der Höhe und/oder der Neigung mit einem entsprechenden Soll-Zustand der Höhe und/oder Neigung.
Dabei können entweder beispielsweise bei der Höhe direkt die Messwerte verglichen werden, oder aber es werden berechnete Werte, die von den Messwerten abhängen, mit entsprechenden Soll-Werten verglichen. Die Berechnungseinrichtung kann beispielsweise die gemessene Höhe eines Bezugspunks umrechnen auf einen anderen Bezugspunkt. Die Berechnungseinheit kann beispielsweise auch auf der Grundlage der Messwerte für die Neigung der Füllmaschine eine Anlagenbezugsebene ermitteln und die Abweichung der Neigung der Anlagenbezugsebene zur Neigung einer die Ebene schneidenden waagrechten Ebene, die senkrecht zu Gravitationsvektor "g" steht, durch Vergleich erfassen. Es ist auch möglich erfasste Neigungswinkel über Winkelfunktionen in Abstände (z.B. Abstände zwischen Maschinenboden und Maschinenuntergrund an bestimmten Stellen z.B. Bereich der Maschinenfüße) umzurechnen und zu vergleichen.

Dann kann die Höhe und/oder die Neigung auf der Grundlage des Vergleichs in Schritt c so eingestellt werden, dass ein Soll-Zustand erreicht wird.

Die vorliegende Erfindung ermöglicht, dass stets eine korrekte Höhe der Füllmaschine eingestellt werden kann, so dass beispielsweise eine Füllrohrachse korrekt zu einer nachfolgenden Anbaumaschine ausgerichtet ist. Durch die exakte, z. B. waagrechte Ausrichtung der Füllmaschine kann die Prozesssicherheit erhöht und die Standsicherheit gewährleistet werden, selbst wenn der Fußboden im Produktionsraum uneben ist. Prinzipien, die mit Hilfe der Schwerkraft funktionieren, können optimal wirken. Es ist jedoch auch möglich, eine vorbestimmte Neigung der Anlagenbezugsebene einzustellen, wenn eine geneigt aufgestellte Anbaumaschine dies erfordert. Dies war bislang nicht möglich.

Eine verbesserte Ausrichtung der Füllmaschine kann auf einfache und zuverlässige reproduzierbare Art und Weise gewährleistet werden.

In Schritt c kann auf der Grundlage einer Abweichung zwischen Ist- und Soll-Zustand berechnet werden, wie die Füllmaschine über entsprechende Einstellelemente ausgerichtet werden muss, um den Soll-Zustand der Höhe und/oder der Neigung zu erreichen, insbesondere in welche Richtung und um welchen Betrag (Δa) die Füllmaschine an verschiedenen Stellen durch jeweilige Maschinenfüße höhenverstellt werden muss. Die Stellen liegen bevorzugt in den Eckbereichen der Füllmaschine. Die Stellen können den Positionen der Maschinenfüße entsprechen.

Insbesondere kann in Schritt c also auf der Grundlage einer Abweichung zwischen Ist- und Soll-Zustand berechnet werden, wie entsprechende Einstellelemente eingestellt werden müssen, um den Soll-Zustand der Höhe und/oder Neigung zu erreichen, insbesondere in welche Richtung und vorzugsweise um welchen Betrag Maschinenfüße der Maschinen höhenverstellt werden müssen. Durch die Berechnung in der Berechnungseinheit kann also exakt berechnet werden, wie der Bediener die Einstellelemente einstellen muss. Es kann für jeden Maschinenfuß angezeigt werden, wie dieser zu verstellen ist, d.h. beispielsweise um wie viele Umdrehungen und in welche Richtung ein Gewinde der verstellbaren Maschinenfüße gedreht werden muss. Im Vergleich zur bloßen Darstellung einer Abweichung auf einem Display ermöglicht das Berechnen um wieviel und in welche Richtung die Füllmaschine durch die Einstellelemente höhenverstellt werden muss eine noch einfachere Handhabung und eine schnellere Justierung.

Es ist möglich, dass eine Anzeige erfolgt, die eine Abweichung vom Ist- und Soll-Zustand anzeigt, so dass der Bediener diese Abweichung schnell und einfach erkennen und eine entsprechende Justierung vornehmen kann. Vorteilhafterweise zeigt die Anzeige auch eine Handlungsempfehlung an zum Justieren entsprechender Einstellelemente, insbesondere zur Höhenverstellung der Maschinenfüße der Füllmaschine. Die Handlungsempfehlung gibt dabei zumindest an in welche Richtung die einzelnen Einstellelemente bzw. Maschinenfüße höhenverstellt werden müssen- vorteilhafterweise auch noch den Betrag.

Es ist jedoch auch möglich, dass die Höhe und/oder Neigung in Schritt d automatisch erfolgt, d.h. dass Antriebe (hydraulische, pneumatische) oder Stellmotoren der Einstellelemente zur Höhenverstellung der Maschinenfüße automatisch angesteuert werden. Die Füllmaschine ist dann in der Lage, selbstständig auf deren abweichende Lage zum Soll-Zustand hinzuweisen und automatisch Korrekturen durchzuführen. Vorteilhaft ist dann die Implementierung einer Regelung. Alternativ kann die Überprüfung des Ist-Zustands und der Abgleich zum Soll-Zustand einmalig zu Beginn des Einstellprozesses, kontinuierlich oder zyklisch während des Einstellprozesses ablaufen.

So kann es vorteilhaft sein, dass nach Schritt d zum Überprüfen des Zustands erneut die Schritte a bis c durchgeführt werden und der Einstellvorgang erst dann beendet wird, wenn bei einem erneuten Vergleich bestimmt wird, dass der Ist-Zustand dem Soll-Zustand entspricht.

Vorteilhafterweise erfolgt bei Erreichen des Soll-Zustands der Höhe und/oder der Neigung eine optische oder akustische Anzeige, so dass der Bediener weiß, dass sich jetzt die Füllmaschine im Soll-Zustand befindet. Es ist jedoch auch möglich, dass bereits zum Einstellen der einzelnen Einstellelemente eine optische und/oder akustische Anzeige erfolgt, wenn das Einstellelement korrekt justiert wurde derart, dass die Füllmachine um den korrekten Betrag in die richtige Richtung durch das jeweilige Einstellelement bewegt wurde. Eine entsprechende Rückmeldung erleichtert das Einstellverfahren erheblich, da, wenn sich der Bediener, zum Einstellen der Maschinenfüße im unteren Bereich der Maschine befindet, er sofort erkennt, wenn der Maschinenfuß in der korrekten Position ist. Ganz besonders vorteilhaft ist hier eine akustische Rückmeldung. Die Anzeige kann jedoch auch an einer entsprechenden Anzeige, d.h. z.B. Display erfolgen. Somit lässt sich die Höhe besonders exakt verstellen, da beispielsweise auch Bruchteile einer Gewindedrehung genau ausgeführt werden können. Somit kann es auch ausreichen, wenn nur die Richtung der Höhenverstellung als Handlungsanweisung gegeben wird.

Um zu bestimmen, ob das Einstellelement korrekt justiert wurde, wird eine entsprechende Messung, z.B. Höhenmessung zum Boden, vorgenommen, oder aber bei Betätigung eines Antriebs durch den Operator durch Messung der Ausdrehhöhe des Antriebs bestimmt, wann die Höhenverstellung abgeschlossen ist. Entsprechendes kann auch durch Signale eines entsprechenden Schrittmotors oder eines Servoantriebs mit Drehgeber (Resolver, Inkrementalgeber, Absolutwertgeber etc.) bewerkstelligt werden.

Der Ist-Zustand der Höhe und/oder der Neigung kann über Messwerte aus mindestens einer in der Füllmaschine integrierten Messeinrichtung erfolgen und/oder über Messwerte einer externen Messeinrichtung. Eine integrierte Messeinrichtung bringt den Vorteil mit sich, dass keine zusätzlichen Instrumente oder Werkzeuge benötigt werden und somit kein geeignetes Werkzeug griffbereit sein muss und auch keine Kenntnisse im Umgang mit einer entsprechenden Messeinrichtung vorausgesetzt ist. Dies ist insbesondere auch im Hinblick auf die Beschädigungsgefahr und Hygiene vorteilhaft. Es ist jedoch auch möglich, dass eine externe Messeinrichtung vorgesehen ist, die Messwerte beispielsweise über Kabel oder Funkverbindung, Bluetooth etc. der Berechnungseinheit zuführt. Darüber hinaus ist es möglich, dass ein Bediener entsprechende Werte misst und manuell in die Berechnungseinrichtung eingibt.

Der Soll-Zustand kann mindestens einer der folgenden Zustände sein:
- die Höhe mindestens eines Anlagenbezugspunkts,
- eine waagrecht ausgerichtete Anlagenbezugsebene,
- eine zu einer waagrechten Ebene geneigten Anlagenbezugsebene,
wobei diese Ebene um eine oder mehrere Achsen um einen jeweiligen entsprechend vorbestimmten Winkel geneigt ist. So kann die Füllmaschine in definiert gewählten Winkellagen abweichend zur theoretischen ebenen Lage schräg gestellt werden.

Eine Füllmaschine insbesondere zum Durchführen des Verfahrens nach mindestens einem der Ansprüche 1 bis 9 weist ein Maschinengehäuse auf, einen Fülltrichter, ein Füllrohr sowie Maschinenfüße.

Gemäß der vorliegenden Erfindung umfasst die Füllmaschine eine Berechnungseinheit, in der Messwerte bezüglich des Ist-Zustands der Höhe und/oder der Neigung, sowie Werte bezüglich des Soll-Zustands der Höhe und/oder der Neigung abgelegt werden können, wobei die Berechnungseinheit eine Vergleichseinrichtung umfasst zum Vergleich des Ist-Zustands mit dem Soll-Zustand bezüglich der Höhe und/oder der Neigung und mindestens ein Einstellelement vorgesehen ist, das auf der Grundlage des Vergleichs von Ist- und Soll-Zustand verstellt werden kann.
Die Berechnungseinrichtung kann so ausgebildet sein, dass sie auf der Grundlage einer Abweichung zwischen Ist- und Soll-Zustand berechnen kann, wie die Füllmaschine über entsprechende Einstellelemente ausgerichtet werden muss, um den Soll-Zustand der Höhe und/oder der Neigung zu erreichen, insbesondere in welche Richtung und um welchen Betrag (Δa) die Füllmaschine durch jeweilige Maschinenfüße an bestimmten Eckbereichen höhenverstellt werden muss.

Die Berechnungseinheit kann auch berechnen, wie entsprechende Einstellelemente eingestellt werden müssen, um den Soll-Zustand bezüglich der Höhe und/oder Neigung zu erreichen, insbesondere in welche Richtung und um welchen Betrag die Maschinenfüße der Füllmaschine höhenverstellt werden müssen. "In welche Richtung" bedeutet hier, ob die Maschine an dem entsprechenden Fuß angehoben oder abgesenkt werden soll.

Vorzugsweise weist die Füllmaschine eine Anzeige auf, die eine Abweichung von Ist- und Soll-Zustand anzeigt und/oder eine Handlungsempfehlung zum Justieren entsprechender Einstellelemente insbesondere zur Höhenverstellung der Maschinenfüße der Füllmaschine anzeigt. Vorteilhafterweise weist die Füllmaschine mindestens ein Einstellelement, vorzugsweise vier höhenverstellbare Füße auf, wobei das mindestens eine Einstellelement jeweils einen Antrieb umfasst, der - insbesondere automatisch - von der Berechnungseinrichtung angesteuert wird, bis ein entsprechender Soll-Wert erreicht wird. Dies kann automatisch über die Berechnungseinheit erfolgen oder z.B. von einem Bediener, vorzugsweise entsprechend einer Handlungsanweisung. Die Füllmaschine weist vorteilhafterweise eine optische und/oder akustische Anzeige auf, die anzeigt, wenn der Soll-Zustand der Höhe und/oder Neigung erreicht ist und/oder anzeigt, wenn ein Einstellelement korrekt justiert wurde.

Die Füllmaschine weist mindestens eine Messeinrichtung auf zum Erfassen des Ist-Zustands bezüglich der Höhe und/oder Neigung und/oder eine Eingabeeinrichtung zur Eingabe von Messwerten der Höhe und/oder Neigung bezüglich des Ist-Zustands.

Zur Messung des Ist-Zustands der Höhe und/oder der Neigung weist die Füllmaschine mindestens einen Sensor, vorzugsweise Abstandssensor auf. Die Sensoren sind insbesondere an verschiedenen Eckbereichen der Füllmaschine angeordnet ist. Somit kann beispielsweise über Abstandssensoren im Bereich eines entsprechenden Maschinenfußes bestimmt bzw. berechnet werden, wann ein Maschinenfuß korrekt höhenverstellt ist.

Besonders vorteilhaft ist gemäß der vorliegenden Erfindung, wenn sowohl die Höhe der Füllmaschine als auch die Neigung bestimmt wird. Dies bringt insbesondere bei unebenen Fußböden die Möglichkeit einer korrekten einfachen und reproduzierbaren Ausrichtung mit sich. Die Füllmaschine kann dann mit einer vorbestimmten Neigung mit einer vorbestimmten Höhe ausgerichtet werden.

Die vorliegende Erfindung wird nachfolgend unter Bezugnahme folgender Figuren näher erläutert:
- Fig. 1: zeigt grobschematisch eine Seitenansicht einer Füllmaschine gemäß der vorliegenden Erfindung,
- Fig. 2: zeigt einen Schnitt durch die Füllmaschine entlang der Linie I-I
- Fig. 3: zeigt grobschematisch eine Anzeige der Füllmaschine,
- Fig. 4: zeigt grobschematisch eine weitere mögliche Anzeige
- Fig. 5: zeigt ein Flussdiagramm für ein Verfahren gemäß der vorliegenden Erfindung.

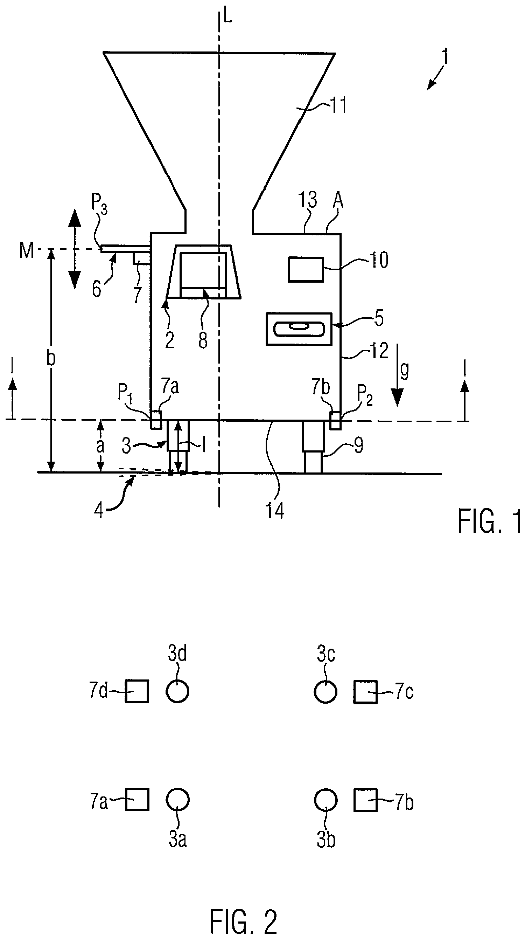

Fig. 1 zeigt grobschematisch eine Seitenansicht einer Füllmaschine gemäß der vorliegenden Erfindung. Diese Füllmaschine dient zum Abfüllen von Nahrungsmittel, z. B. zur Herstellung von Würsten. Die Füllmaschine weist einen Fülltrichter 11 auf, in den pastöse Masse gefüllt werden kann und über ein nicht dargestelltes Förderwerk über ein Füllrohr 6 in eine Wursthülle ausgestoßen werden kann. In einer Fülllinie schließen sich an eine entsprechende Füllmaschine weitere Anbaumaschinen, wie beispielsweise Transporteinrichtungen, Klipper, Füllwolf Aufhängelinien, etc. an, zu denen die Füllmaschine korrekt ausgerichtet werden muss. Die Füllmaschine weist weiter ein Maschinengehäuse 12 auf, das eine Oberfläche 13 aufweist und einen Boden 14. Die Oberfläche kann eben ausgebildet sein, z.B. also unter einem rechten Winkel zur Seitenwandung verlaufen oder vorzugsweise schräg nach außen abfallen oder gewölbt sein, derart, dass Wasser abgeleitet werden kann. Die Maschine ist auf Maschinenfüßen 3, hier vier Maschinenfüßen 3a, b, c, d an jedem Eckbereich des Gehäuses aufgestellt. Die Maschinenfüße 3 weisen Einstellelemente 9 auf, über die die Höhe der Füllmaschine 1, d.h. die Höhe eines Bezugspunkts, hier der Abstand zwischen Bezugspunkt P1, P2, P3 zu dem Maschinenuntergrund bzw. Boden 4 eingestellt werden kann.

Wie aus Fig. 1 hervorgeht, kann der Boden bzw. Maschinenuntergrund 4, wie durch die gestrichelten Linien dargestellt ist, geneigt sein. Da das Füllrohr 6 bzw. dessen Mittelachse M korrekt in einer bestimmten Höhe bzw. zu einer anschließenden Anbaumaschine angeordnet sein muss, muss die Höhe b zwischen Mittelachse des Füllrohrs 6 und dem Boden 4 exakt eingestellt und bei unebenem Boden justiert werden. Auch eine Anlagenbezugsebene A z.B. eine Ebene, die senkrecht auf der Längsachse der Maschine steht, beispielsweise eine Ebene, die die Oberfläche 13 des Gehäuses einschließt oder eine Ebene, die von zumindest drei Eckpunkten am unteren Ende des Maschinengehäuses aufgespannt wird, soll beispielsweise waagrecht, d.h. senkrecht zur Gravitation G ausgerichtet sein. Zumindest soll jedoch die Mittelachse M des Füllrohrs 6 vorteilhafterweise in einer entsprechenden Ebene, die senkrecht auf dem Gravitationsvektor steht, liegen und ebenfalls senkrecht zu dem Gravitationsvektor G ausgerichtet sein, bzw. senkrecht zur Längsachse L der Füllmaschine. Es ist jedoch auch denkbar, dass die Füllmaschine geneigt zu einer waagrechten Ebene aufgestellt werden soll, wie nachfolgend noch näher erläutert wird.

Über das Höhenverstellen der Einstellelemente 9 der Maschinenfüße 3 kann die Füllmaschine 1 entsprechend ausgerichtet werden. Das Einstellelement kann dabei z.B. ein Gewinde umfassen, wobei die Höhe der Füße durch Drehen des unteren Bereichs der Füße im Gewinde um eine bestimmte Umdrehungsanzahl eingestellt werden kann. Das Einstellelement kann jedoch nicht nur manuell betätigt werden, sondern es kann alternativ auch ein Antrieb vorgesehen sein, beispielsweise ein Stellantrieb, bzw. ein hydraulischer Antrieb, über den wie auch bei einer manuellen Einstelleinrichtung die Abmessung I der Maschinenfüße 3 und somit die Höhe und Neigung der Füllmaschine 1 einstellbar ist.

Die Füllmaschine weist erfindungsgemäß eine Berechnungseinheit 10 auf, in der Messwerte bezüglich des Ist-Zustands der Höhe und/oder der Neigung sowie Werte bezüglich des Soll-Zustands der Höhe und/oder der Neigung abgelegt werden können.

Zum Messen der Höhe der Füllmaschine kann mindestens eine Messeinrichtung 7, insbesondere in Form eines Abstandssensors vorgesehen sein, der den Abstand von einem Bezugspunkt P1, P2, P3 zu dem Maschinenuntergrund 4 messen kann.

In Fig. 1 sind nur beispielhaft die Abstandssensoren 7a, 7b gezeigt, wobei sich bei diesem Ausführungsbeispiel auch noch in den Eckbereichen bei den Füßen 3d und 3c entsprechende Abstandssensoren befinden können. Entsprechende Abstandsmesswerte a, die hier beispielsweise den Abstand zwischen dem Maschinenboden 14 und dem Maschinenuntergrund 4 messen, werden an die Berechnungseinrichtung 10 weitergeleitet.

Zusätzlich oder alternativ kann beispielsweise auch im Bereich des Füllrohrs 6 ein Abstandsmesser 7 vorgesehen sein, über den der Abstand b zwischen der Mittelachse m des Füllrohrs und dem Maschinenuntergrund 4 gemessen wird und an die Berechnungseinrichtung 10 weitergeleitet wird. Somit kann direkt oder indirekt bestimmt werden, auf welcher Höhe sich das Füllrohr 6 befindet, wobei die Berechnungseinrichtung 10 aufgrund eines Soll-Ist-Zustandsvergleichs, feststellen kann, ob sich das Füllrohr 6 in einer korrekten Position befindet. Der Bezugspunkt P der Messung ist jedoch unerheblich, da aufgrund der bekannten Abmessungen der Füllmaschine auch ausgehend von anderen Messpunkten, z.B. P1, P2, die Position der Mittelachse des Füllrohrs bestimmt bzw. berechnet werden kann. Als Abstandssensoren dienen beispielsweise optische Sensoren oder aber eine Einrichtung zur Distanzmessung auf der Basis einer Laufzeitmessung und/oder Reflexion (z.B. Infrarot, Laser, Schall, Ultraschall), aber auch ein kraftsensitiver und/oder federbetätigter Fühler/Taster kann Verwendung finden. Ferner kann die entsprechende Höhe nicht nur über eine elektronische Messeinrichtung sondern auch manuell mittels Meterstab, Messlatte etc. gemessen werden und über eine schematisch dargestellte Eingabeeinheit 8 eingegeben und der Berechnungseinheit 10 übermittelt werden.

Vorteilhafterweise können in der Berechnungseinheit 10 auch Messwerte bezüglich der Neigung abgelegt werden. Dazu umfasst die Füllmaschine 1 vorzugsweise einen integrierten Neigungssensor 5, der entsprechende Messwerte an die Berechnungseinrichtung 10 übermittelt. Es ist auch möglich, dass der Neigungssensor nicht in der Füllmaschine integriert ist, sondern eine externe Neigungsmesseinrichtung (nicht dargestellt) vorgesehen ist, die beispielsweise auf die Oberfläche 13 oder an eine Seitenwand der Füllmaschine 1 angelegt wird, und die die erfassten Messwerte bezüglich der Neigung an die Berechnungseinrichtung 10 entweder über Kabel oder Funkverbindung Bluetooth etc. weiterleitet. Es ist auch möglich, dass die von der externen Neigungsmesseinrichtung erzeugten Messwerte von dem Bediener über eine Eingabeeinheit 8 eingegeben werden und so in der Berechnungseinrichtung 10 abgelegt werden. Zur Messung der Neigung stehen dabei beispielsweise Einrichtungen zur Verfügung, die unter Zuhilfenahme eines physikalischen Wirkprinzips oder Effekts die Neigung ermitteln. Geeignet sind hierbei beispielsweise mikroelektromechanische Feder-Masse-Systeme, Einrichtungen zur Druckmessung an mehreren Auflagepunkten, hier Druckmessung an den Fußflächen, die dem Maschinenuntergrund 4 zugewandt sind, optische Messeinrichtungen, insbesondere Kamera, Lasertracking, optisches Lot, Laserlot, Gyroskop/Kreiselinstrument, Dehnungsmessstreifen/Kraftaufnehmer, die an der Füllmaschine angebracht sind und die tatsächliche Position und Lage der Füllmaschine erfassen. Ferner können Vorrichtungen zur induktiven oder kapazitiven Messung vorgesehen sein, die an der Füllmaschine angebracht sind und durch Abstandsmessung die Position und Lage der Füllmaschine erfassen. Ferner kann auch ein Ferraris-Beschleunigungssensor eingesetzt werden, sowie piezoelektrische Messelemente oder Quecksilber-Neigungsschalter bzw. auch elektronische Wasserwaagen. Aber auch das Ablesen analoger Wasserwaagen mit ablesbarer Winkelanzeige ist möglich, wobei entsprechende Winkel dann in die Eingabeeinheit 8 eingegeben werden können. Schließlich kann die Neigung auch über mindestens drei Abstandssensoren ermittelt werden, die vorzugsweise in einer Ebene senkrecht zur Längsachse L liegen, und den Abstand zum Boden 4 messen, z.B. die Abstandssensoren 7 a, b ,(c, d nicht dargestellt) in den vier Eckbereichen der Füllmachine.

In die Berechnungseinrichtung 10 können auch Soll-Werte für einen Soll-Zustand eingegeben werden, derart, dass in der Berechnungseinrichtung 10 der Ist-Zustand vom Soll-Zustand bezüglich Höhe und/oder Neigung der Füllmaschine verglichen werden kann. Dazu weist die Berechnungseinrichtung vorteilhafterweise eine Vergleichseinrichtung auf. Die Vergleichseinrichtung kann entweder beispielsweise direkt die Messwerte mit entsprechenden Soll-Messwerten vergleichen oder aber Werte, die auf der Grundlage der Messwerte ermittelt wurden mit entsprechenden Soll-Werten vergleichen. Der Soll-Zustand bzw. entsprechende Werte werden entweder manuell über die Eingabeeinheit der Berechnungseinheit 10 eingegeben oder aber automatisch ermittelt, indem beispielsweise die Höhe über eine entsprechende Messeinrichtung der sich anschließenden Anbaumaschine gemessen wird. Alternativ sind entsprechende Soll-werte in einer Maschinensteuerung bereits werksseitig abgespeichert. Ein Soll-Zustand kann beispielsweise einer der folgenden Zustände sein:
- Die Höhe mindestens eines Anlagenbezugspunkts P, wobei der zu vergleichende Wert entweder einem Messwert entspricht, oder aber aus dem gemessenen Wert berechnet wird,
- eine waagrecht ausgerichtete Anlagenbezugsebene Aₛₒₗₗ,
- eine zur waagrechten Ebene geneigte Anlagenbezugsebene, d.h., dass die Anlagenbezugsebene zu einer waagerechten Ebene, um eine oder mehrere Achsen um einen entsprechenden Winkel geneigt ist, d.h. dass angestrebt wird, dass die Füllmaschine in definiert gewählten Winkellagen abweichend zur theoretisch ebenen Lage schräggestellt wird.

Zum Vergleich der Neigung der Ist-Anlagenbezugsebene werden beispielsweise die gemessenen Neigungswinkel um eine oder mehrere Achsen der Anlagenbezugsebene mit den entsprechenden Neigungswinkeln der Soll-Anlagenbezugsebene (z.B. waagrecht Neigungswinkel = 0) verglichen.

Es ist auch möglich, erfasste Neigungswinkel über Winkelfunktionen in Abstände (z.B. Abstände zwischen Maschinenboden und Maschinenuntergrund an bestimmten Stellen, z.B. Bereich der Maschinenfüße) umzurechnen und zu vergleichen. Diese Abstandsangaben können für verschiedene Positionen angewendet oder umgerechnet werden, vorteilhaft ist die Umrechnung auf die einzelnen Einstellelemente 9 der Maschinenfüße 3 und/oder Stellen an denen ein entsprechender Distanzsensor 7a,b angeordnet ist.

Es kann dann geometrisch berechnet werden, wie die Füllmaschine über entsprechende Einstellelemente, z.B. die höhenverstellbaren Maschinenfüße, ausgerichtet werden muss, damit die Anlagenbezugsebene eine bestimmte Neigung hat und auf einer bestimmten Höhe liegt.

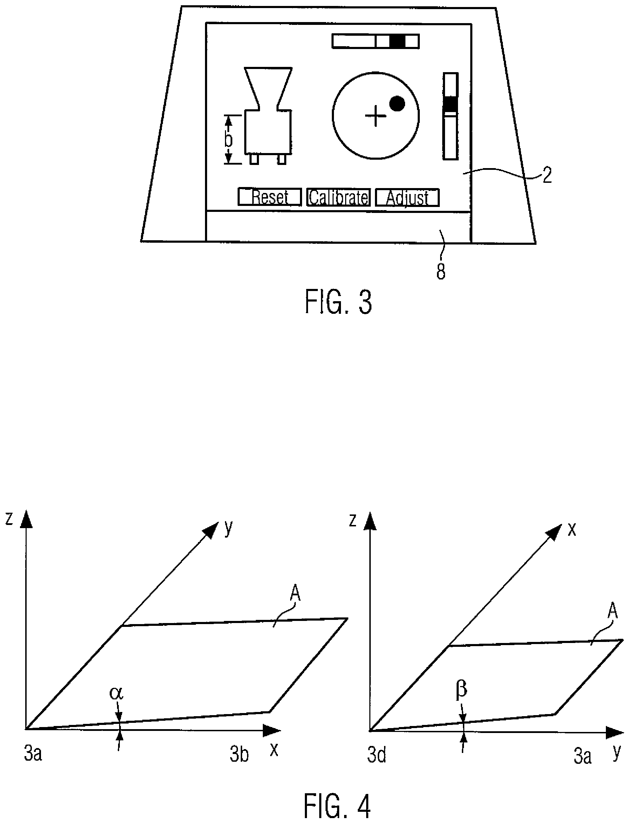

Die Lage der Füllmaschine bzw. der Ist-Anlagenbezugsebene A, die abweicht von der insbesondere waagrechten Soll-Anlagenbezugsebene Aₛₒₗₗ kann abstrakt oder in realistischen Bildern, Messdaten / Zahlen oder in Diagrammen in einer Anzeige, d.h. einem Display 2 (siehe auch Fig. 3) dargestellt werden. Die entsprechenden Neigungswinkel können alternativ auch wie oben beschrieben über Winkelfunktionen umgerechnet werden, d.h., dass die Anzeige auch in Abstandsangaben erfolgen kann.

Durch Berechnung, um welchen Betrag und in welche Richtung die Maschine an verschiedenen Stellen höhenverstellt werden muss, können konkrete Handlungsempfehlungen (schrittweise oder gleichzeitig) gegeben und angezeigt werden, um die Einstellelemente (beispielsweise Gewindeumdrehungen) zu justieren und damit die Ausrichtung der Füllmaschine zu ändern und in den Soll-Zustand zu bringen. Eine weitere Ausbaustufe kann sein, die Justierung der Maschinenausrichtung automatisch über zuvor bereits beschriebene Antriebe zu realisieren, vorteilhaft ist dann die Implementierung einer Regelung.

Fig. 3 zeigt hierzu beispielsweise die gemessene Höhe b der Füllmaschine, sowie eine Darstellung der gemessenen Neigung über zwei senkrecht zueinander stehende Balken - entsprechend der Anzeige einer elektronischen Wasserwaage.

Fig. 4 zeigt eine andere mögliche Darstellungsweise der Neigung der Füllmaschine. Der linke Graph in Fig. 4 zeigt eine Darstellung der gemessenen Ist-Anlagenbezugsebene A in einem x/y/z-Koordinatensystem. Die Neigungsmesseinrichtung 5 hat hier beispielsweise einen Neigungswinkel α von 3° zu einer x/y-Ebene um die y Achse ermittelt, wobei die x/y-Ebene senkrecht zum Gravitationsvektor steht, also waagrecht ausgebildet ist. Die x/y-Ebene ist hier die Soll-Anlagenbezugsebene. Ferner hat die Neigungsmesseinrichtung 5 beispielsweise ermittelt, dass die Ist-Anlagenbezugsebene unter einem Winkel β von 2° zur y/x-Ebene um die x-Achse geneigt ist.

Weiter wurde neben den waagrechten Soll-Anlagenbezugsebenen in die Berechnungseinrichtung 10 auch noch eine Soll-Höhe für die Füllmaschine 1 eingegeben. Darüber hinaus wurde auch die Ist-Höhe der Füllmaschine, wie zuvor beschrieben, bereits ermittelt.

Hieraus kann die Berechnungseinrichtung über z.B. über Winkelfunktionen berechnen, welchen Abstand a die vier Eckbereiche (an bestimmten Stellen) des Bodens der Füllmaschine 1 jeweils zum Maschinenuntergrund 4 haben sollen, bzw. kann z.B., da die entsprechenden Ist-Abstände a an einem Bezugsunkt P1 (durch Abstandssensoren 7) gemessen oder berechnet wurden, ein Δa für jeden der hier 4 Bezugspunkte berechnen. Bei der Berechnung können die Abstände a auch zusätzlich oder alternativ für Positionen, an denen die Maschinenfüße angeordnet sind, umgerechnet werden als a_{Fuß}. Dann gilt a= l wobei l die Länge des Fußes zwischen Boden 4 und Gehäuseboden14 ist. Dann gilt Δ a_{Fuß} = Δl. Es können dann konkrete Handlungsempfehlungen ausgegeben werden, auf welche Höhe die Einstellelemente 9, d.h. die Maschinenfüße 3, eingestellt werden müssen. Bei dem konkreten Ausführungsbeispiel könnte beispielsweise eine Anweisung sein, dass der Fuß 3a um 2 cm nach unten verstellt, also um Δl verlängert werden muss, der Fuß 3b um 3 cm nach unten verstellt, also um Δl verlängert werden muss, der Fuß 3d um 1 cm nach oben verstellt, also um Δl verkürzt werden muss und der Fuß 3c um 1,5 cm nach oben verstellt werden muss. Die Abstände können auch beispielsweise in Umdrehungen angegeben werden.

Bei einem konkreten Beispiel ist z.B. b_{Soll} = 105 cm, b_{Ist} = 103 cm, α = 1°, β = 0,5°, a_{Fuß3a} = 20 cm, a_{Fuß3b} = 18 cm, a_{Fuß3c} = 21 cm, a_{Fuß3d} = 20,5 cm.

Der Bediener kann nun manuell die Einstelleinrichtung entsprechend den Handlungsanweisungen der höhenverstellbaren Maschinenfüße verstellen. Damit eine entsprechende Justierung exakt erfolgen kann, kann über eine entsprechende Messeinrichtung, z.B. ein Abstandsmesser 7a, b, c, d in den jeweiligen vier Eckbereichen gemessen werden, wann eine konkrete Justierung stattgefunden hat, da ja auch Δa bekannt ist. Die Füllmaschine 1 weist dabei eine Anzeige auf, entweder optisch z.B. in dem Display 2.Die Anzeige kann auch als akustische Rückmeldung erfolgen, indem ein Signalton ausgegeben wird, wenn die jeweilige Einstelleinrichtung korrekt justiert wurde. Wenn eine Rückmeldung vorgesehen ist muss nicht der Betrag Δl angezeigt werden, um den der jeweilige Fuß verstellt werden muss, sondern lediglich die Richtung. Der Bediener kann das Justieren beenden sobald die Rückmeldung erfolgt.

Es ist auch möglich, dass die Einstellung nicht manuell erfolgt, sondern über einen Antrieb, wie zuvor beschrieben. Dabei kann entweder der Bediener den Antrieb betätigen, wobei es auch hier wie zuvor beschrieben, zu einer Rückmeldung kommt, wenn die Ist-Position des Maschinenfußes 3 erreicht ist, oder aber es kann eine automatische Ansteuerung des Antriebs erfolgen, so dass die Einstellung der Maschinenfüße 3 automatisch über eine Steuereinrichtung erfolgt. Wenn die Füllmaschine 1 insgesamt korrekt ausgerichtet ist, d.h. Neigung und Höhe stimmen, kann dies ebenfalls entsprechend optisch oder akustisch angezeigt werden. Hier kann auf die Abstandssensoren zur Überprüfung der Justierung der einzelnen Maschinenfüße verzichtet werden und beispielsweise über Signale des Antriebs ermittelt werden um welchen Betrag Δl der jeweilige Fuß verstellt wurde.

Die Ausrichtung der Füllmaschine kann beispielsweise erfolgen beim erstmaligen Aufstellen einer Füllmaschine 1 in einer Produktionsumgebung, nach dem Umsetzen einer Füllmaschine innerhalb einer Produktionsumgebung, sowie bei der Anpassung der Maschinenhöhe aufgrund abweichender Anforderungen, beispielsweise zum Anschluss diverser Anbaumaschinen oder aus ergonomischen Gesichtspunkten.

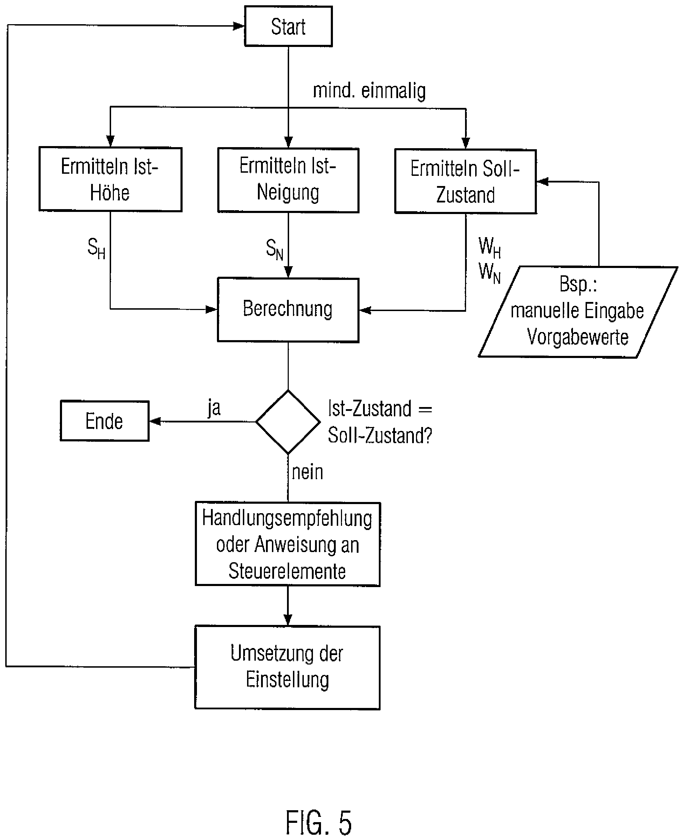

Fig. 5 zeigt ein Flussdiagramm für ein Verfahren gemäß der vorliegenden Erfindung. Zunächst muss der Soll-Zustand der Füllmaschine ermittelt werden. Dies kann bereits vorab werksseitig passieren, wobei entsprechende Soll-Werte für die Maschinenhöhe bzw. deren Neigung in einer Steuereinrichtung eingegeben und an die Berechnungseinrichtung 10 weitergeleitet werden können oder bereits darin abgespeichert sind. Es ist jedoch auch eine manuelle Eingabe der Soll-Werte möglich.

Entsprechende Soll-Werte der Höhe wₕ bzw. der Neigung wₙ werden an die Berechnungseinrichtung 10 weitergeleitet, wie durch den Pfeil dargestellt ist. Nun muss, wie zuvor beschrieben, noch die Ist-Höhe ermittelt werden, indem diese wie zuvor beschrieben, durch eine entsprechende Messeinrichtung 7 gemessen wird oder aber von einem Bediener gemessen wird und über eine Eingabeeinrichtung 8 eingegeben wird. Ein entsprechender Ist-Wert für die Höhe s_{H} wird ebenfalls an die Berechnungseinrichtung 10 weitergeleitet. Darüber hinaus wird vorteilhafterweise auch die Neigung der Füllmaschine, wie zuvor erläutert, gemessen. Entsprechende Messwerte s_{N}, die der Ist-Neigung entsprechen, werden ebenfalls an die Berechnungseinrichtung 10 weitergeleitet. Es ist möglich, dass die Messwerte direkt mit entsprechenden Soll-Werten verglichen werden, oder aber, dass die Werte s_{H} und s_{N} in Werte umgerechnet werden, die von s_{H} und s_{N} abhängen und dann mit entsprechenden Soll-Werten verglichen werden. So kann beispielsweise aus den Winkeln, um die die Anlagenbezugsebene A um mindestens eine Achse geneigt ist, über Winkelfunktionen auch ein Abstand von bestimmten Bezugspunkten zum Boden, beispielsweise in den vier Eckbereichen ermittelt werden, wobei dies ebenfalls angezeigt werden kann, wie zuvor beschrieben wurde. In der Berechnungseinrichtung 10 wird dann der Ist-Zustand bezüglich Neigung und Höhe mit dem Soll-Zustand verglichen. Ergibt sich, dass der Ist-Zustand dem Soll-Zustand entspricht, wird das Verfahren beendet. Ergibt der Vergleich, dass eine Abweichung zwischen Ist- und Soll-Zustand bezüglich Höhe und/oder Neigung gibt, kann dies beispielsweise an einer Anzeige angezeigt werden. Vorteilhafterweise wird dann in der Berechnungseinrichtung auf der Grundlage der Abweichung zwischen Ist- und Soll-Zustand berechnet, um welchen Betrag und in welche Richtung die Füllmaschine über die verstellbaren Maschinenfüße um jeweils Δa verstellt werden muss, und gemäß einer bevorzugten Ausführungsform, wie entsprechende Einstellelemente 9 eingestellt werden müssen, um den Soll-Zustand der Höhe und/oder Neigung zu erreichen, wobei dann insbesondere ermittelt wird, um welchen Betrag und in welche Richtung die Maschinenfüße der Füllmaschine höhenverstellt werden müssen. Danach kann eine Handlungsempfehlung am Display 2 dargestellt werden, die zumindest angibt, in welche Richtung und vorzugsweise um welchen Betrag die Maschinenfüße jeweils höhenverstellt werden müssen, Alternativ kann die Berechnungseinrichtung auch Signale an Steuerelemente weiterleiten, die Antriebe der Einstelleinrichtungen der Maschinenfüße entsprechend der Berechnung antreiben.

Nach Umsetzen der Einstellung beginnt das Ausrichtverfahren erneut um zu überprüfen, ob die Einstellung erfolgreich war. Ergibt sich dann, dass der Ist-Zustand dem Soll-Zustand entspricht, wird das Verfahren beendet. Andernfalls wird die Verfahrensschleife nochmals durchlaufen.

## Patentansprüche

1. Verfahren zum Ausrichten einer Füllmaschine (1), insbesondere zur Wurstherstellung **gekennzeichnet durch** die folgenden Schritte:
a) Messen der Höhe (a, b) und/oder der Neigung einer Füllmaschine (1) entsprechend einem Ist-Zustand,
b) Übermitteln der Messwerte(s) an eine Berechnungseinheit (10),
c) Vergleich des Ist-Zustands der Höhe und/oder der Neigung mit einem Soll-Zustand der Höhe und/oder der Neigung durch die Berechnungseinheit (10) und
d) Einstellen der Höhe (a, b) und/oder der Neigung auf der Grundlage des Vergleichs in Schritt c).

2. Verfahren nach Anspruch 1, **dadurch gekennzeichnet, dass** in Schritt c) auf der Grundlage einer Abweichung zwischen Ist- und Soll-Zustand berechnet wird, wie die Füllmaschine über entsprechende Einstellelemente (9) ausgerichtet werden muss, um den Soll-Zustand der Höhe und/oder der Neigung zu erreichen, insbesondere in welche Richtung und um welchen Betrag (Δa) die Füllmaschine durch jeweilige Maschinenfüße (3) höhenverstellt werden muss.

3. Verfahren nach Anspruch 1 oder 2, **dadurch gekennzeichnet, dass** nach Schritt c) eine Anzeige erfolgt, die eine Abweichung vom Ist- zum Soll-Zustand anzeigt und/oder
eine Handlungsempfehlung zum Justieren entsprechender Einstellelemente (9), insbesondere zur Höhenverstellung der Maschinenfüße (3a, b, c, d) der Füllmaschine (1) anzeigt, wobei zumindest die Richtung angegeben wird in die die jeweiligen Maschinenfüße verstellt werden müssen.

4. Verfahren nach Anspruch 1, 2 oder 3, **dadurch gekennzeichnet, dass** zum Einstellen der Höhe und/oder der Neigung in Schritt d) automatisch Antriebe der Einstellelemente (9) zur Höhenverstellung der Maschinenfüße (3) der Füllmaschine angesteuert werden.

5. Verfahren nach mindestens einem der Ansprüche 1 bis 4, **dadurch gekennzeichnet, dass** nach Schritt d) erneut Schritte a) bis c) durchgeführt werden.

6. Verfahren nach mindestens einem der Ansprüche 1 bis 5, **dadurch gekennzeichnet, dass** bei Erreichen des Soll-Zustands der Höhe und/oder der Neigung eine optische und/oder akustische Anzeige erfolgt, und insbesondere eine optische und/oder akustische Anzeige erfolgt, wenn ein Einstellelement (9) korrekt justiert wurde, derart dass die Füllmaschine um den korrekten Betrag (Δa) in die richtige Richtung durch das jeweilige Einstellelement bewegt wurde.

7. Verfahren nach mindestens einem der Ansprüche 1 bis 6, **dadurch gekennzeichnet, dass** der Ist-Zustand der Höhe und/oder der Neigung über Messwerte aus mindestens einer in der Füllmaschine (1) integrierten Messeinrichtung (5, 7) erfolgt und/oder über Messwerte einer externen Messeinrichtung.

8. Verfahren nach mindestens einem der Ansprüche 1 bis 7, **dadurch gekennzeichnet, dass** Werte bezüglich des Soll-Zustands der Höhe und/oder der Neigung in die Berechnungseinrichtung (10) eingegeben werden.

9. Verfahren nach mindestens einem der Ansprüche 1 bis 8, **dadurch gekennzeichnet, dass** der Soll-Zustand mindestens einer der folgenden Zustände sein kann:
- die Höhe mindestens eines Anlagenbezugspunkts (P)
- eine waagrecht ausgerichtete Anlagenbezugsebene (Asoll),
- eine zu einer waagrechten Ebene geneigte Anlagenbezugsebene (Asoll).

10. Füllmaschine (1), insbesondere zum Durchführen des Verfahrens nach mindestens einem der Ansprüche 1 bis 9, mit einem Maschinengehäuse (12), einem Fülltrichter (11), einem Füllrohr (6) und Maschinenfüßen (3), **dadurch gekennzeichnet, dass**
die Füllmaschine (1) eine Berechnungseinheit (10) aufweist, in der Messwerte bezüglich des Ist-Zustands der Höhe und/oder der Neigung, sowie Werte bezüglich des Soll-Zustands der Höhe und/oder der Neigung abgelegt werden können, wobei die Berechnungseinheit (10) eine Vergleichseinrichtung umfasst zum Vergleich des Ist-Zustands mit dem Soll-Zustand bezüglich der Höhe und/oder der Neigung, und
mindestens ein Einstellelement (9), das auf der Grundlage des Vergleichs von Ist- und Soll-Zustand verstellt werden kann.

11. Füllmaschine nach Anspruch 10, **dadurch gekennzeichnet, dass** die Berechnungseinrichtung so ausgebildet ist, dass sie auf der Grundlage einer Abweichung zwischen Ist- und Soll-Zustand berechnen kann, wie die Füllmaschine über entsprechende Einstellelemente (9) ausgerichtet werden muss, um den Soll-Zustand der Höhe und/oder der Neigung zu erreichen, insbesondere in welche Richtung und um welchen Betrag (Δa) die Füllmaschine durch jeweilige Maschinenfüße (3) höhenverstellt werden muss, und insbesondere berechnet wie entsprechende Einstellelemente (9) eingestellt werden müssen, um den Soll-Zustand bezüglich der Höhe und/oder Neigung zu erreichen, insbesondere in welche Richtung und vorteilhafterweise um welchen Betrag die Maschinenfüße (3) der Füllmaschine höhenverstellt werden müssen.

12. Füllmaschine nach Anspruch 10 oder 11, **dadurch gekennzeichnet, dass** die Füllmaschine (1) eine Anzeige (2) aufweist, die eine Abweichung von Ist- und Soll-Zustand anzeigt und/oder eine Handlungsempfehlung zum Justieren entsprechender Einstellelemente (9), insbesondere zur Höhenverstellung der Maschinenfüße der Füllmaschine anzeigt.

13. Füllmaschine nach mindestens einem der Ansprüche 10 bis 12, **dadurch gekennzeichnet, dass** das mindestens eine Einstellelement jeweils einen Antrieb umfasst, der insbesondere automatisch von der Berechnungseinrichtung (10) angesteuert wird, bis ein entsprechender Sollwert erreicht wird.

14. Füllmaschine nach mindestens einem der Ansprüche 10 bis 13, **dadurch gekennzeichnet, dass** die Füllmaschine eine optische und/oder akustische Anzeige umfasst, die anzeigt, wenn der Soll-Zustand der Höhe und/oder Neigung erreicht ist, und/oder anzeigt, wenn ein Einstellelement korrekt justiert wurde, derart dass die Füllmaschine um den korrekten Betrag (Δa) in die richtige Richtung durch das jeweilige Einstellelement bewegt wurde.

15. Füllmaschine nach mindestens einem der Ansprüche 10 bis 14, **dadurch gekennzeichnet, dass** die Füllmaschine (1) mindestens eine Messeinrichtung (7, 5) umfasst zum Erfassen des Ist-Zustands bezüglich der Höhe und/oder Neigung und/oder
eine Eingabeeinrichtung (8), zur Eingabe von Messwerten der Höhe und/oder Neigung bezüglich des Ist-Zustands.

16. Füllmaschine nach mindestens einem der Ansprüche 10 bis 15, **dadurch gekennzeichnet, dass** zur Messung des Ist-Zustands der Höhe und/oder Neigung die Messeinrichtung mindestens einen Sensor, vorzugsweise Abstandsensor (7), insbesondere an verschiedenen Ecken der Füllmaschine aufweist.

## Claims

1. Method for aligning a filling machine (1), in particular for the production of sausages **characterized by** the following steps:
a) measuring the height (a, b) and/or the inclination of a filling machine (1) according to an actual state,
b) transmitting the measured values (s) to a calculation unit (10),
c) comparing the actual state of the height and/or the inclination with a target state of the height and/or the inclination by the calculation unit (10), and
d) adjusting the height (a, b) and/or the inclination on the basis of said comparison in step c).

2. Method according to claim 1, **characterized in that** it is in step c) calculated on the basis of a deviation between the actual and the target state how said filling machine must be aligned via appropriate adjustment elements (9) to obtain the target state with respect to the height and/or inclination, in particular in which direction and by what magnitude (Δa) said filling machine must be adjusted in height by respective machine feet (3).

3. Method according to claim 1 or 2, **characterized in that** an indication is given according to step c) indicating a deviation of the current from the target state and/or
a recommendation for action for adjusting respective adjustment elements (9), in particular for the adjustment in height of said machine feet (3a, b, c, d) of said filling machine (1), where at least the direction is indicated in which said respective machine feet must be adjusted.

4. The method according to claim 1, 2 or 3, **characterized in that** automatic drives of said adjustment elements (9) are for the adjustment in height of said machine feet (3) of said filling machine in step d) actuated to adjust the height and/or the inclination.

5. Method according to at least one of the claims 1 to 4, **characterized in that** steps a) to c) are again performed after step d).

6. Method according to at least one of the claims 1 to 5, **characterized in that** an optical and/or an acoustic indication is given when the target state of the height and/or inclination has been reached, and in particular a visual and/or audible indication is given when an adjustment element (9) has been correctly adjusted such that said filling machine has been moved by the correct magnitude (Δa) in the correct direction by said respective adjustment element.

7. Method according to at least one of the claims 1 to 6, **characterized in that** the actual state of the height and/or the inclination can be effected by way of measured values from at least one measuring device (5, 7) integrated into said filling machine (1) and/or via measured values from an external measuring device.

8. Method according to at least one of the claims 1 to 7, **characterized in that** values pertaining to the target state of the height and/or the inclination are entered into said calculation device (10).

9. Method according to at least one of the claims 1 to 8, **characterized in that** the target state can be at least one of the following states:
- the height of at least one assembly reference point (P),
- a horizontally oriented assembly reference plane (Aₛₒₗₗ),
- an assembly reference plane (Aₛₒₗₗ) that is inclined relative to a horizontal plane,

10. Filling machine (1), in particular for performing the method according to at least one of the claims 1 to 9, comprising a machine housing (12), a hopper (11), a stuffing tube (6) and machine feet (3), **characterized in that**
said filling machine (1) comprises a calculation unit (10) in which measured values pertaining to the actual state of the height and/or the inclination and values pertaining to the target state of the height and/or inclination can be stored, where
said calculation unit (10) comprises a comparison device for the comparison of the actual state with the target state in terms of the height and/or the inclination, and
at least one adjustment element (9) which is adjustable based on the comparison of the actual to the target state.

11. Filling machine according to claim 10, **characterized in that** said calculation device is configured such that it can calculate on the basis of a deviation between the actual and the target state how said filling machine must be aligned via appropriate adjustment elements (9) to obtain the target state with respect to the height and/or the inclination, in particular in which direction and by what magnitude (Δa) said filling machine must be adjusted in height by respective machine feet (3), and in particular calculates how respective adjustment elements (9) must be adjusted to obtain the target state with respect to the height and/or the inclination, in particular in what direction and advantageously by what magnitude said machine feet (3) of said filling machine must be adjusted in height.

12. Filling machine according to claim 10 or 11, **characterized in that** said filling machine (1) comprises an indicator that indicates a deviation of the actual from the target state and/or indicates a recommendation for action to adjust respective adjustment elements (9) in particular for height adjustment of said machine feet of said filling machine.

13. Filling machine according to at least one of the claims 10 to 12, **characterized in that** said at least one adjustment element respectively comprises a drive which is controlled in particular automatically by said calculation device (10) until a corresponding target value has been reached.

14. Filling machine, according to at least one of the claims 10 to 13, **characterized in that** said filling machine comprises an optical and/or acoustic indicator which indicates when the target state of the height and/or the inclination has been reached, and/or indicates when an adjustment element has been correctly adjusted, such that said filling machine has been moved by the correct magnitude (Δa) in the correct direction by said respective adjustment element.

15. Filling machine according to at least one of the claims 10 to 14, **characterized in that** said filling machine (1) comprises at least one measuring device (7, 5) for detecting the actual state with respect to the height and/or the inclination and/or
an input device (8) for entering measured values of the height and/or the inclination pertaining to the actual state.

16. Filling machine according to at least one of the claims 10 to 15, **characterized in that** said measuring device comprises at least one sensor, preferably a distance sensor (7), for measuring the actual state of the height and/or the inclination, in particular at different corners of said machine.

## Revendications

1. Procédé d'alignement d'une machine de remplissage (1), en particulier destinée à fabriquer des saucisses, le procédé étant **caractérisé par** les étapes suivantes :
a) mesure de la hauteur (a, b) et/ou de l'inclinaison d'une machine de remplissage (1) dans une situation effective,
b) transmission de la ou des valeurs de mesure à une unité de calcul (10),
c) comparaison par l'unité de calcul (10) de la situation effective en hauteur et/ou en inclinaison à une situation de consigne en hauteur et/ou en inclinaison et
d) ajustement de la hauteur (a, b) et/ou de l'inclinaison sur la base de la comparaison effectuée à l'étape c).

2. Procédé selon la revendication 1, **caractérisé en ce qu'**à l'étape c), on calcule sur la base d'un écart entre la situation effective et la situation de consigne comment la machine de remplissage doit être alignée par des éléments appropriés d'ajustement (9) pour atteindre la situation de consigne en hauteur et/ou en inclinaison, et en particulier dans quelle direction et de quelle valeur (Δa) la machine de remplissage doit être ajustée en hauteur par l'intermédiaire des différents pieds (3) de la machine.

3. Procédé selon les revendications 1 ou 2, **caractérisé en ce qu'**après l'étape c) a lieu un affichage qui indique l'écart entre la situation effective et la situation de consigne et/ou qui affiche une recommandation de manipulation d'ajustement d'éléments appropriés d'ajustement (9), en particulier pour l'ajustement en hauteur des pieds (3a, b, c, d) de la machine de remplissage (1), au moins la direction dans laquelle les différents pieds de la machine doivent être ajustés étant indiquée.

4. Procédé selon les revendications 1, 2 ou 3, **caractérisé en ce que** pour ajuster la hauteur et/ou l'inclinaison à l'étape d), des entraînements des éléments d'ajustement (9) assurant l'ajustement en hauteur des pieds (3) de la machine de remplissage sont commandés automatiquement.

5. Procédé selon au moins l'une des revendications 1 à 4, **caractérisé en ce qu'**après l'étape d), les étapes a) à c) sont de nouveau exécutées.

6. Procédé selon au moins l'une des revendications 1 à 5, **caractérisé en ce que** lorsque la situation de consigne en hauteur et/ou en inclinaison est atteinte, un affichage optique et/ou acoustique a lieu et en particulier un affichage optique et/ou acoustique a lieu si un élément d'ajustement (9) a été ajusté correctement de telle sorte que la machine de remplissage ait été déplacée de la valeur correcte (Δa) dans la direction correcte par l'élément d'ajustement concerné.

7. Procédé selon au moins l'une des revendications 1 à 6, **caractérisé en ce que** la situation effective en hauteur et/ou en inclinaison est déterminée par des valeurs de mesure provenant d'au moins un dispositif de mesure (5, 7) intégré dans la machine de remplissage (1) et/ou par l'intermédiaire de valeurs de mesure d'un dispositif de mesure externe.

8. Procédé selon au moins l'une des revendications 1 à 7, **caractérisé en ce que** des valeurs concernant la situation de consigne en hauteur et/ou en inclinaison sont introduites dans le dispositif de calcul (10).

9. Procédé selon au moins l'une des revendications 1 à 8, **caractérisé en ce que** la situation de consigne peut être au moins l'une des situations suivantes :
- la hauteur d'au moins un point de référence (P) de l'installation,
- un plan orienté horizontalement de l'installation (Asoll),
- un plan de référence d'installation (Asoll) incliné par rapport à un plan horizontal.

10. Machine de remplissage (1), en particulier destinée à mettre en oeuvre le procédé selon au moins l'une des revendications 1 à 9, et présentant un boîtier de machine (12), un entonnoir de remplissage (11), un tube de remplissage (6) et des pieds de machine (3),
**caractérisée en ce que**
la machine de remplissage (1) présente une unité de calcul (10) dans laquelle des valeurs de mesure concernant la situation effective en hauteur et/ou en inclinaison ainsi que des valeurs concernant la situation de consigne en hauteur et/ou en inclinaison peuvent être introduites,
l'unité de calcul (10) comportant un dispositif de comparaison qui compare la situation effective à la situation de consigne en hauteur et/ou en inclinaison et
au moins un élément d'ajustement (9) pouvant être ajusté sur la base de comparaison entre la situation effective et la situation de consigne.

11. Machine de remplissage selon la revendication 10, **caractérisée en ce que** le dispositif de calcul est configuré de manière à pouvoir calculer comment la machine de remplissage doit être alignée par des éléments d'ajustement (9) appropriés sur la base d'un écart entre la situation effective et la situation de consigne pour atteindre la situation de consigne en hauteur et/ou en inclinaison, et en particulier dans quelle direction et de quelle valeur (Δa) la machine de remplissage doit être ajustée en hauteur par l'intermédiaire des différents pieds (3) de la machine, et calcule en particulier comment des éléments d'ajustement (9) appropriés doivent être ajustés pour atteindre la situation de consigne en hauteur et/ou en inclinaison et en particulier dans quelle direction et avantageusement de quelle ampleur les pieds (3) de la machine de remplissage doivent être ajustés en hauteur.

12. Machine de remplissage selon les revendications 10 ou 11, **caractérisée en ce que** la machine de remplissage (1) présente un affichage (2) qui indique l'écart entre la situation effective et la situation de consigne et/ou qui fournit une recommandation de manipulation en vue d'ajuster des éléments d'ajustement (9) appropriés, en particulier pour l'ajustement en hauteur des pieds de la machine de remplissage.

13. Machine de remplissage selon au moins l'une des revendications 10 à 12, **caractérisée en ce qu'**au moins un élément d'ajustement comporte un entraînement qui est commandé en particulier automatiquement par le dispositif de calcul (10) jusqu'à ce qu'une valeur de consigne appropriée soit atteinte.

14. Machine de remplissage selon au moins l'une des revendications 10 à 13, **caractérisée en ce que** la machine de remplissage comporte un affichage optique et/ou acoustique qui indique si la situation de consigne en hauteur et/ou en inclinaison est atteinte et/ou qui indique si un élément d'ajustement a été ajusté correctement de telle sorte que la machine de remplissage ait été déplacée de la valeur correcte (Δa) dans la direction correcte par l'élément d'ajustement concerné.

15. Machine de remplissage selon au moins l'une des revendications 10 à 14, **caractérisée en ce que** la machine de remplissage (1) comporte au moins un dispositif de mesure (7, 5) qui saisit la situation effective en hauteur et/ou en inclinaison et/ou un dispositif d'introduction (8) qui permet d'introduire des valeurs de mesure en hauteur et/ou en inclinaison de la situation effective.

16. Machine de remplissage selon au moins l'une des revendications 10 à 15, **caractérisée en ce que** pour mesurer la situation effective en hauteur et/ou en inclinaison, le dispositif de mesure présente au moins un capteur, de préférence un capteur de distance (7), en particulier en différents sommets de la machine de remplissage.
